# EUROPEAN PATENT APPLICATION

(11) **EP 3 605 410 A1**
(43) Date of publication of application: **05.02.2020**
(21) Application number: 18906994.1
(22) Date of filing: 26.02.2018
(51) Int. Cl.: G06N 99/00, G06Q 10/04

(54) **STATE PREDICTION DEVICE AND STATE PREDICTION CONTROL METHOD**

(71) Applicant: Hitachi Information & Telecommunication Engineering, Ltd., Kanagawa 220-6122 (JP)
(72) Inventor: UEJIMA Toshiaki, Yokohama-shi, Kanagawa 220-6122 (JP)
(74) Representative: Manitz Finsterwald Patent- und Rechtsanwaltspartnerschaft mbB
(86) International application number: PCT/JP2018/007039
(87) International publication number: WO 2019/163141

(57) **Abstract**

A state prediction apparatus 100 includes a learning data generation section 212 to acquire measurement data obtained by an observation sensors 300 at a predetermined time interval, separate the measurement data for each motion mode of the observation object, and generate learning data, a clustering section 213 to classify the learning data of a predetermined number into a predetermined category, give a label, and generate supervised data, a learning section 214 to input the supervised data to a learning algorithm for learning, and generate a learned model 252 and representative data of each of the category, a time series model generation section 215 to arrange the labels 244 given to the learning data within a predetermined model generation unit period in time series in order of generation of the learning data, and generate a time series model 273, and a prediction section 220 to calculate a prediction value using the time series model from newly acquired measurement data.

## Description

### TECHNICAL FIELD

The present invention relates to a state prediction technology, and relates particularly to a technology which predicts measurement data of the future based on sensor data (measurement data) outputted successively from observation sensors and predicts the state of an observation object.

### BACKGROUND ART

In order to predict the future state of an observation object based on measurement data outputted from observation sensors, it is required to generate a time series model of the measurement data. For generating this time series model, it is required to detect a temporal separator of the measurement data. For example, in Patent Literature 1, there is disclosed a technology "including the steps of dividing the time series data into evenly-sized overlapping segments of data, generating an image representing segment data for each segment, using the time series data to determine a trend associated with each image, and storing each of the generated images and its associated trend as the data set (excerption of abstract)".

### CITATION LIST

### PATENT LITERATURE

Patent Literature 1: Japanese Patent Application Laid-Open No. 2017-157213

### SUMMARY OF INVENTION

### TECHNICAL PROBLEM

According to the technology disclosed in Patent Literature 1, the measurement data are divided into temporally evenly sized segments. However, when the observation object has plural motion modes and the outputted measurement data change in a complicated manner, segmentation by even size is not necessarily appropriate. Therefore, it is hard to improve accuracy of state prediction.

The present invention has been achieved in view of the circumstance described above, and its object is to provide a technology for predicting the state of an observation object having plural motion modes with high accuracy based on measurement data (time series observation value relating to the observation object) outputted from observation sensors.

### SOLUTION TO PROBLEM

The present invention has configurations described in claims. An aspect of the state prediction apparatus according to the present invention includes: a learning data generation section configured to acquire first sensor data at a predetermined time interval, the first sensor data being obtained by a first observation sensor observing the state of an observation object, separate the first sensor data for each motion mode of the observation object, and generate learning data; a clustering section configured to classify each of the learning data of a predetermined number generated into a predetermined category, give a label prepared beforehand for each of the category, and generate supervised data; a learning section configured to input the supervised data of the predetermined number to a learning algorithm to learn the supervised data, generate a learned model of the learning algorithm, and generate representative data of each of the category; a time series model generation section configured to arrange the labels given to the learning data by the clustering section within a predetermined model generation unit period in time series in order of generation of the learning data, and generate a time series model; and a prediction section configured to calculate a prediction value of the first sensor data as a state of the observation object of a future time point from newly acquired first sensor data using the time series model.

### ADVANTAGEOUS EFFECT OF INVENTION

According to the present invention, a state of an observation object having plural motion modes can be predicted with high accuracy based on measurement data outputted from observation sensors. Also, problems and solutions other than those described above will be clarified by the following embodiments.

### BRIEF DESCRIPTION OF DRAWINGS

[Fig. 1] Fig. 1 is a hardware configuration diagram of a state prediction apparatus of a first embodiment.
[Fig. 2] Fig. 2 is a functional block diagram of the state prediction apparatus of the first embodiment.
[Fig. 3] Fig. 3A is an explanatory drawing for explaining an example of label data of the first embodiment, Fig. 3B and Fig. 3C are explanatory drawings for explaining an example of supervised data of the first embodiment, and Fig. 3D and Fig. 3E are explanatory drawings for explaining an example of a representative database of the first embodiment.
[Fig. 4] Fig. 4A and Fig. 4B are explanatory drawings for explaining the summary of learning of the first embodiment.
[Fig. 5] Fig. 5 is an explanatory drawing for explaining the summary of deep learning of the first embodiment.
[Fig. 6] Fig. 6 is an explanatory drawing for explaining an example of time series model data of the first embodiment.
[Fig. 7] Fig. 7 is a flowchart of a state prediction process of the first embodiment.
[Fig. 8] Fig. 8 is a flowchart of a pre-process and a learning process of the first embodiment.
[Fig. 9] Fig. 9 is a flowchart of a time width calculation process of the first embodiment.
[Fig. 10] Fig. 10A is a graph of an example of waveform data of measurement data of the first embodiment, and Fig. 10B is a graph of an example of a histogram of the measurement data of the first embodiment.
[Fig. 11] Fig. 11A and Fig. 11B are graphs for explaining a time width calculation process of the first embodiment.
[Fig. 12] Fig. 12A and Fig. 12B are graphs for explaining a time width calculation process of the first embodiment.
[Fig. 13] Fig. 13A and Fig. 13B are graphs for explaining a time width calculation process of the first embodiment.
[Fig. 14] Fig. 14 is a flowchart of a prediction process of the first embodiment.
[Fig. 15] Fig. 15 is a graph for explaining a modification of the first embodiment.
[Fig. 16] Fig. 16A and Fig. 16B are graphs for explaining a modification of the first embodiment.
[Fig. 17] Fig. 17A and Fig. 17B are graphs for explaining a modification of the first embodiment.
[Fig. 18] Fig. 18 is an explanatory drawing for explaining a cut-out time width of each measurement data of a second embodiment.
[Fig. 19] Fig. 19 is an explanatory drawing for explaining the summary of deep learning of the second embodiment.
[Fig. 20] Fig. 20 is a flowchart of a learning process of the second embodiment.
[Fig. 21] Fig. 21 is a flowchart of a prediction process of the second embodiment.

### DESCRIPTION OF EMBODIMENTS

### <<First Embodiment>>

Below, a preferred embodiment of the present invention will be explained in detail referring to the drawings. Below, explanation will be made exemplifying a case where plant equipment is to be an observation object.

In the present embodiment, a time series model of change of measurement data is generated using sensor data (measurement data) obtained successively from various kinds of observation sensors attached to various portions of the plant equipment. Also, using the generated time series model, measurement data at a future time point are predicted, and state prediction of the plant equipment that is an observation object is executed. Further, eventually, presence/absence of a failure and the like of the plant equipment is determined based on the predicted measurement data.

With respect to the plant equipment, the motion mode changes by control, and feedback control is executed automatically. For example, to a production container provided with the plant equipment, raw material such as a liquid and a gas is fed by a pump and the like. When the flow-in rate of this case is controlled from an external program, the current and voltage of a pump motor change according to the control. Also, when the temperature of the production container is controlled, the temperature of the production container and the current and voltage of a heater and a cooling pump motor change, accordingly.

In order to observe such state of each portion of the plant equipment, various kinds of sensors (observation sensors) for detecting the current, voltage, temperature and the like are attached to each portion of the plant equipment.

The measurement data obtained in time series from these observation sensors are waveform data that show a wave shape changing temporally. Because plant equipment is feedback-controlled between plural motion modes as described above, change of the current and voltage is non-steady. Therefore, in the waveform data, plural motion modes are observed non-steadily, and the measurement data obtained successively also become non-steady.

When combination of the motion modes and the time width of each motion mode are controlled including automatic feedback from an external program corresponding to items produced by the plant equipment, such phenomenon occurs in general.

Also, an event that the measurement data (time series data) obtained successively is non-steady means that statistic parameters such as the average and variance of the measurement data are not constant or change non-continuously.

Modeling and prediction of non-steady time series data by a statistic method such as ARIMA (Auto Regressive Integrated Moving Average) are hard. In the present embodiment, a state is predicted by generating a time series model of a motion mode from measurement data obtained from an observation sensor attached to plant equipment that executes such motion and calculating a prediction value of an object.

Here, "object" means one directly observed from sensor information (sensor data; measurement data) outputted by each of the observation sensors. For example, when the observation sensor is a temperature sensor, the object is temperature. The object is current in the case of a current sensor, the object is voltage in the case of a voltage sensor, and the object is a portion itself of the plant equipment of the photographing object or a product of the plant equipment in the case of a camera (CMOS sensor).

### [Hardware Configuration]

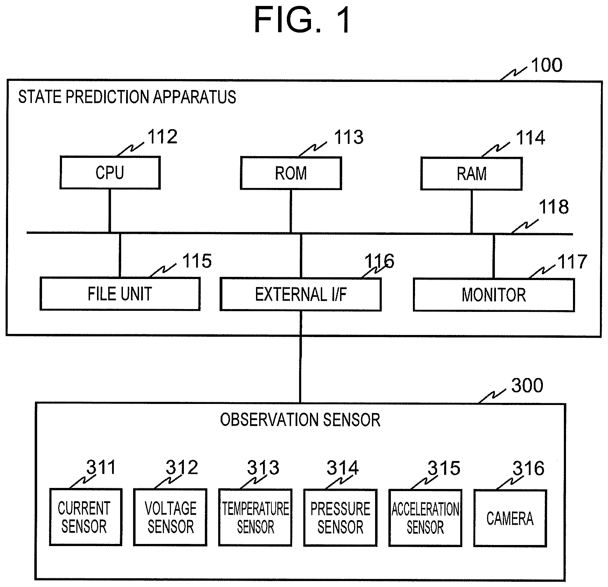

In Fig. 1, a hardware configuration of a state prediction apparatus according to the present embodiment is shown. As shown in Fig. 1, a state prediction apparatus 100 according to the present embodiment is provided with a CPU 112, a ROM 113, a RAM 114, a file unit 115, an external interface (I/F) 116, a monitor 117, and a bus 118.

The CPU 112 executes a calculation process. The ROM 113 and the file unit 115 function as a data storage device. In the ROM 113, programs such as a process routine are stored beforehand. Also, the file unit 115 may be configured of an HDD for example. The monitor 117 displays the process result. The CPU 112, the ROM 113, the RAM 114, the file unit 115, the external interface 116 and the monitor 117 are connected to each other by the bus 118 so as to be capable of providing/receiving commands and data, and function as a computer.

Further, although the state prediction apparatus 100 according to the present embodiment is provided with many constituent elements of the electric system such as a power-supply unit in addition to the configurations described above, since they are known or general, detailed explanation will be omitted.

Also, to the external I/F 116, observation sensors 300 are connected which are for acquiring the state information of the plant equipment that is an observation object of the state prediction apparatus 100. The observation sensors 300 includes, for example, a current sensor 311, a voltage sensor 312, a temperature sensor 313, a pressure sensor 314, an acceleration sensor 315, a camera 316, and the like. The kind of the observation sensor connected is not limited to them.

As described above, the state prediction apparatus 100 of the present embodiment generates a time series model of the measurement data where plural motion modes are observed non-steadily, and calculates a prediction value of the object.

In generating the time series model, the state prediction apparatus 100 acquires the measurement data outputted from the observation sensors 300 successively, separates the acquired measurement data for each motion mode, and generates a time series model of the measurement data separated for each motion mode. Also, the prediction value is calculated using newly acquired measurement data that are different from the measurement data used in generating the time series model. Below, a functional configuration of the state prediction apparatus 100 of the present embodiment achieving this will be explained.

### [Functional Block]

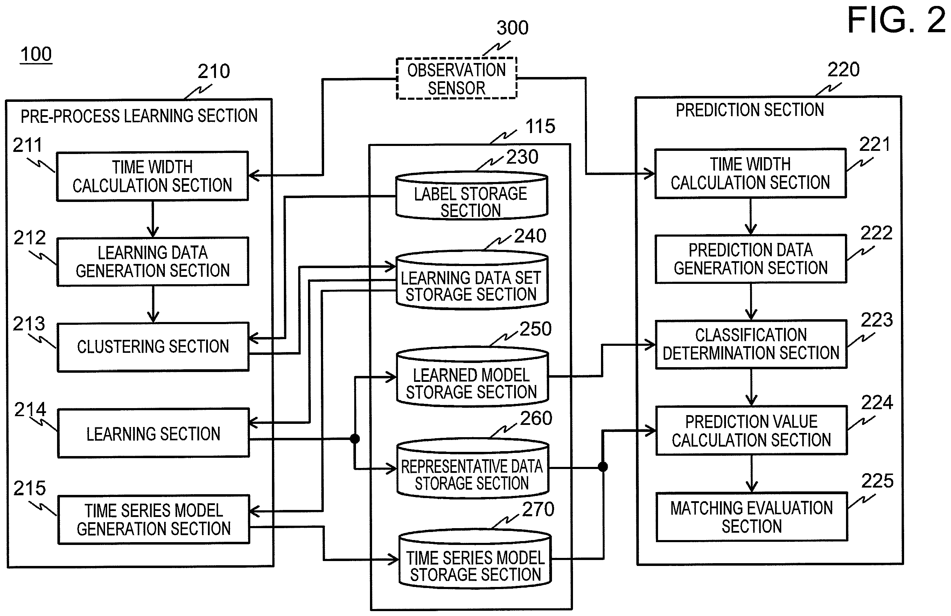

Functional blocks of the state prediction apparatus 100 of the present embodiment are shown in Fig. 2. In order to achieve the functions described above, the state prediction apparatus 100 of the present embodiment is provided with a pre-process learning section 210 and a prediction section 220.

The pre-process learning section 210 generates learning data from measurement data acquired successively at a predetermined time interval, inputs the learning data to a learning algorithm to learn the learning data, and generates a learned model, and representative data and a time series model of each classification. The learning data are obtained by separating the measurement data for each motion mode and segmenting the measurement data. In the present embodiment, the measurement data are segmented for each motion mode by an optimum time width respectively to be made the learning data.

In order to achieve this, the pre-process learning section 210 is provided with a time width calculation section 211, a learning data generation section 212, a clustering section 213, a learning section 214, and a time series model generation section 215.

Also, similarly to the pre-process learning section 210, the prediction section 220 separates the measurement data obtained from the observation sensors 300 with an optimum time width for each motion mode, and predicts and evaluates measurement data at a future time point using the learned model and the representative data and the time series model of each classification generated by the pre-process learning section 210.

In order to achieve this, the prediction section 220 is provided with a time width calculation section 221, a prediction data generation section 222, a classification determination section 223, a prediction value calculation section 224, and a matching evaluation section 225.

Respective functions described above are achieved by that the CPU 112 loads the programs stored in the ROM 113 and the file unit 115 beforehand to the RAM 114 and executes the programs.

Also, in the file unit 115 or the ROM 113, programs and data required for achieving the processes described above are stored. In the present embodiment, respective storage sections of a label storage section 230, a learning data set storage section 240, a learned model storage section 250, a representative data storage section 260, and a time series model storage section 270 for example are provided. Below, explanation will be made exemplifying a case where they are provided in the file unit 115.

### [Pre-process Learning Section]

First, the detail of each section of the pre-process learning section 210 and the prediction section 220 will be explained.

The time width calculation section 211 of the pre-process learning section 210 calculates the time width of each motion mode of the observation object using the measurement data. The calculated time width is a time width in segmenting the measurement data for each motion mode. Therefore, the calculated time width will be hereinafter referred to as a cut-out time width.

In the present embodiment, every time the measurement data are acquired, the time width calculation section 211 generates a histogram of the measured value, and calculates a time width over which the distribution of the histogram shows a lump of a crest-shape distribution such as the normal distribution for example, as the cut-out time width. The detail of the calculation method will be described below. Also, in the present embodiment, for a process of the clustering section 213 described below, a predetermined number of data are necessary. Therefore, the time width calculation section 211 may calculates the cut-out time width sequentially after acquiring the measurement data of a period sufficiently satisfying the process of the clustering section 213.

The learning data generation section 212 cuts the measurement data for each motion mode, and generates learning data inputted to the learning algorithm. In the present embodiment, the learning data generation section 212 separates the measurement data by the cut-out time width calculated by the time width calculation section 211, and generates the learning data. In the present embodiment, as the learning data, the learning data generation section 212 generates waveform data showing temporal change of the measurement data. Also, a histogram expressing the distribution of the occurrence frequency of each value of the measurement data of the cut-out time width (histogram) may be further used. The waveform data shows the order of appearance of the value of each measurement data, and the histogram shows the rate of the value of each measurement data.

When a predetermined number of the learning data are collected, the clustering section 213 generates supervised data from each learning data generated from the measurement data cut out for each motion mode. In the present embodiment, according to a predetermined method, the clustering section 213 is subject to clustering (categorizing; classifying) each learning data, and generates the supervised data with which the learning data and the classification result are associated. The supervised data generated are stored in the learning data set storage section 240.

The number (the predetermined number described above) of the learning data collected in executing clustering differs according to the kind of the observed data. Therefore, the clustering section 213 collects at least, the learning data of a number capable of detecting a set of the motion modes. In the case of a data kind where a set of the motion modes appears within a short time, learning data generated from the measurement data of several tens of seconds portion for example are used. In the case of a data kind where it takes a long time for a set of the motion modes to appear, learning data generated from the measurement data of several tens of days portion are used. The number of collection is determined beforehand according to the data kind.

For clustering, a k-means method, a method improving the k-means method, and so on for example are used. The number of classification (category) and the label that is the identification information of each category are prepared beforehand, and are stored in the label storage section 230.

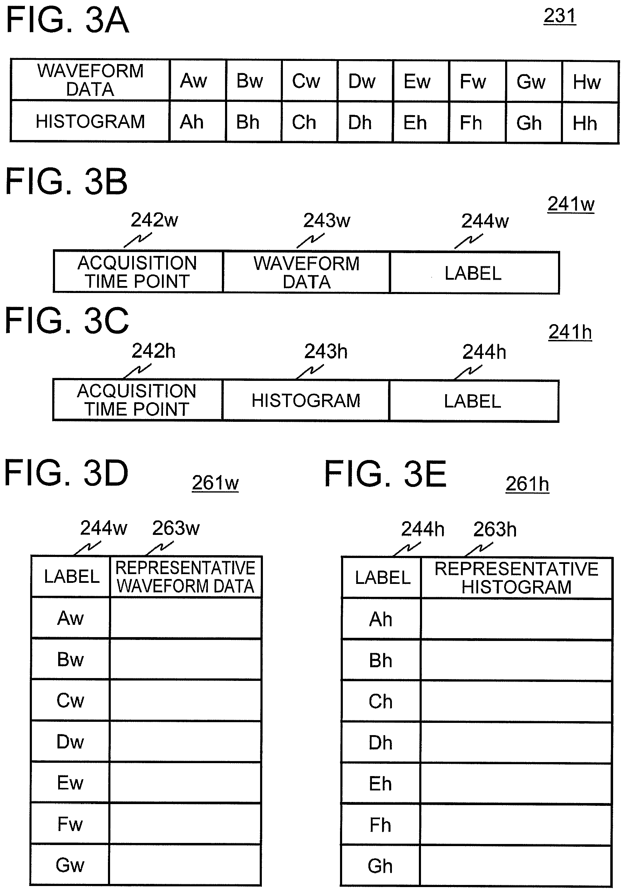

An example of label data 231 stored in the label storage section 230 is shown in Fig. 3A. When the learning data are waveform data and a histogram, a label is prepared for each of them. Here, as an example, the label example of a case where eight labels are prepared namely a case of executing clustering into eight categories is shown.

Here, explanation will be made exemplifying a case of executing clustering into eight categories using the k-means method. When the motion mode is not known, clustering into eight categories determined beforehand as an initial value as the present example is not appropriate. As a result, there is a case where learning of a learning algorithm (deep learning net) 251 by the learning section 214 shown below does not converge, or the evaluation result by the matching evaluation section 225 exceeds a predetermined range, and relearning becomes necessary. In such case, the clustering section 213 returns to the process here (clustering process), increases or decreases the number of the labels (the number of the categories), and executes clustering again. For example, the clustering section 213 increases the number of the categories to 10 and executes clustering into 10 categories again, or decreases the number of the labels to 6 and executes clustering into 6 categories again.

First, the clustering section 213 allocates eight labels to each learning data appropriately. It means that learning data to which a same label is given are classified into one category.

Next, the clustering section 213 calculates the centroid value of the histogram feature quantity (number of times, average value, variance value, number of times of the most frequent value, median value, and so on) corresponding to each learning data for each category (a first step). Then, the clustering section 213 associates obtained eight centroid values with labels of the category in question, respectively.

Thereafter, with respect to the histogram feature quantity of each learning data, the clustering section 213 calculates the distance from eight centroid values respectively, and gives a label associated with the closest centroid value again (a second step).

The clustering section 213 repeats the first step and the second step until the centroid value or given label does not change, or until change of the centroid value becomes a predetermined range or less. The category corresponding to the label eventually given to each learning data is the classification result (clustering result) of the learning data. That is to say, a set of each learning data and the label attached to the learning data is the supervised data, and is stored in the learning data set storage section 240.

Examples of the configuration of the group of the supervised data stored in the learning data set storage section 240 at this time are shown in Fig. 3B and Fig. 3C. In the present embodiment, as supervised data 241, supervised data 241w of the waveform data shown in Fig. 3B and supervised data 241h of the histogram shown in Fig. 3C are stored respectively.

With respect to the supervised data 241w, an acquisition time point 242w, learning data (waveform data) 243w, and a label 244w are stored in association with each other. The acquisition time point 242w is to be the first time point of the cut-out time width of each learning data 243w and so on for example. Also, with respect to the supervised data 241h, an acquisition time point 242h, learning data (histogram data) 243h, and a label 244h are stored respectively in association with each other.

Also, hereinafter, when it is not necessary to discriminate the supervised data 241w and the supervised data 241h from each other, they are represented by the supervised data 241, and respective items are also represented by an acquisition time point 242, learning data 243, and a label 244. The same is applicable also to other data.

The learning section 214 inputs learning data set to a predetermined learning algorithm, and generates a learned model. In the present embodiment, as the predetermined learning algorithm, deep learning for example is used. That is to say, the learning section 214 learns a deep learning net by the learning data set that is a group of supervised data.

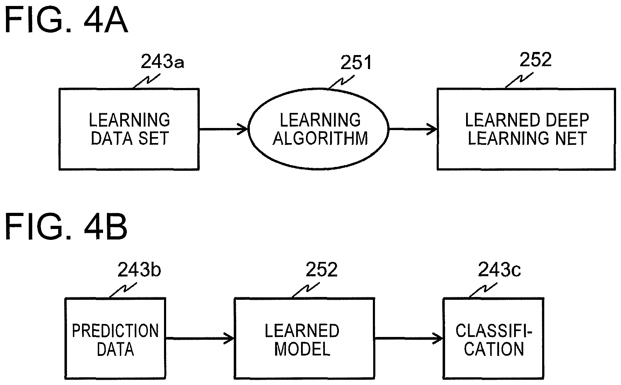

In the present embodiment, as shown in Fig. 4A, the learning section 214 generates a learned deep learning net 252 by inputting a learning data set 243a configured of the group of the learning data 243 to the learning algorithm 251 in the pre-process learning section 210. Hereinafter, the learned deep learning net 252 is referred to also as a learned model 252. Also, as shown in Fig. 4B, in the prediction section 220, the learning section 214 performs classification 243c of prediction data 243b using the learned model 252. That is to say, the learning section 214 gives a label 244 to each prediction data 243b.

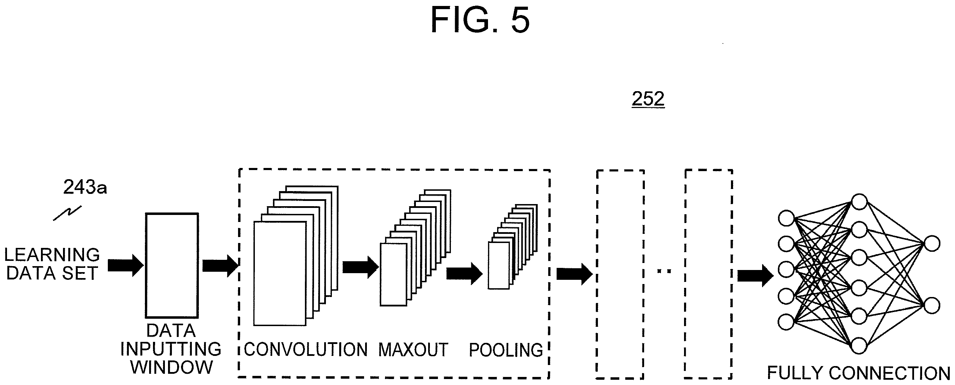

Here, an example of the learned deep learning net 252 generated by the learning section 214 of the present embodiment will be explained. Fig. 5 is a drawing for explaining an example of the learned deep learning net 252.

As shown in the present drawing, the learning section 214 aligns the learning data set 243a configured of the group of the learning data 243 obtained from the measurement data cut-out with the cut-out time width for example to a preset time width, and inputs the learning data set 243a to a data inputting window of the learning algorithm 251. Also, the length of the time width of the data is aligned by adding data of before or after the time width, repeating the data, and so on.

As shown in Fig. 5, with respect to the data inputted to the data inputting window, the feature is extracted by each layer of a convolution layer, a Maxout layer, and a Pooling layer of the deep learning net, and the data are inputted to a Fully connection layer. Also, the data are outputted by the Fully connection layer as a classification result from a combination of the feature. Also, the convolution layer, the Maxout layer, and the Pooling layer may be configured to stack the layer of three sets of them by several times.

In the present embodiment, as the learned model 252, the number of layers, the number of nodes, the connection between nodes, the weight, and so on of the learned deep learning net 252 are eventually stored.

Also, after learning by the learning section 214, or after clustering by the clustering section 213, the learning section 214 generates representative data for each label 244 and stores the generated data in the representative data storage section 260 in association with the label 244. The representative data are obtained by calculating, for each label 244, the average of the waveform data and/or the histogram to which the label is given.
In the case of the waveform data for example, the average is calculated by overlaying the waveform data to which a same label is given and dividing the waveform data by the number of the waveforms.

Examples of a representative database 261 (261w, 261h) stored in the representative data storage section 260 are shown in Fig. 3D and Fig. 3E. In the representative database 261w, representative waveform data 263w that are representative data of the waveform data are stored in association with each label 244w. Also, in a similar manner, in the representative database 261h, a representative histogram 263h is stored in association with the label 244h.

The time series model generation section 215 arranges each label 244 in time series, and generates a time series model. In the present embodiment, the time series model generation section 215 arranges the labels 244 given to each learning data in time series, for each predetermined period (model generation unit period), and generates the time series model. In the present embodiment, by arranging the labels 244 of each learning data stored in the learning data set storage section 240 in the order of generation of the learning data, the time series model generation section 215 generates the time series model. Also, the time series model generated is stored in the time series model storage section 270.

Also, the model generation unit period is predetermined to be one hour, one day, and so on for example according to the kind of the measurement data.

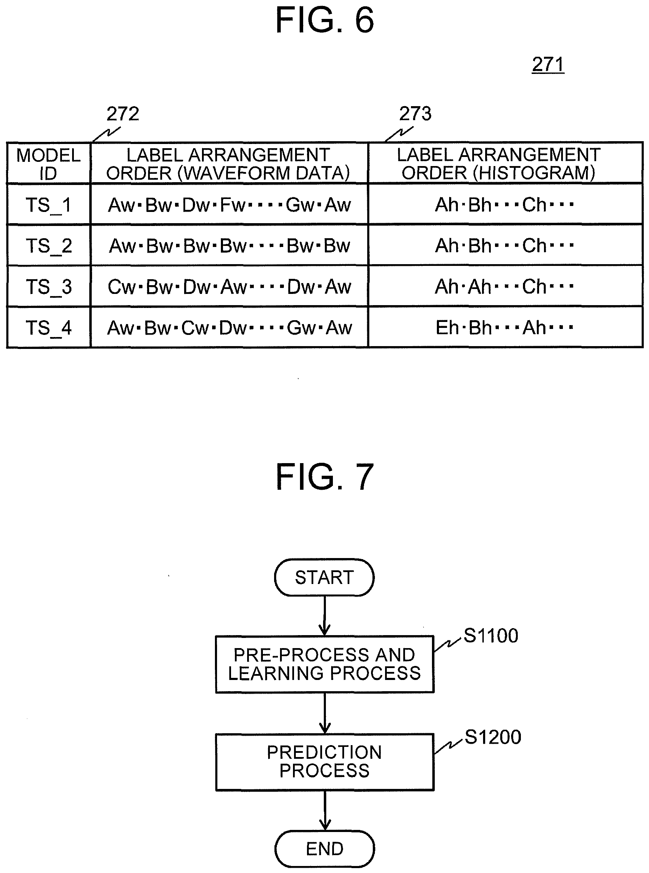

An example of time series model data 271 stored in the time series model storage section 270 is shown in Fig. 6. As the time series model data 271, time series model identification information (model ID) 272 that identifies a time series model 273 is stored in association with the time series model 273, for each time series model 273. The time series model 273 is deemed to be different when the arrangement order of the labels 244 arranged in time series is different, and the model ID 272 is given to each of the time series model 273.

Also, in the example shown in Fig. 6, the time series model 273 where the arrangement order of at least one of the labels 244 differs is deemed to be a different time series model, and a different model ID 272 is given. However, the present embodiment is not limited to it. It may be configured that plural time series models 273 with similar arrangement order of the labels 244 are deemed to be one group and a same model ID 272 is given.

Also, when both of the waveform data and the histogram are used as the learning data, the arrangement orders of the both data are combined and are handled as one arrangement order of the labels. For example, in the example of Fig. 5, between TS_1 and TS_2 of the model ID 272, although the arrangement order of the labels of the histogram is the same, the arrangement order of the labels of the waveform data is different each other. Therefore, they are deemed to have different arrangement orders of the labels and given different model IDs 272, respectively.

### [Prediction Section]

Next, each configuration of the prediction section 220 will be explained. The time width calculation section 221 and the prediction data generation section 222 of the prediction section 220 respectively have a function similar to that of the time width calculation section 211 and the learning data generation section 212 of the pre-process learning section 210. In this regard, data using for prediction generated by the prediction data generation section 222 are referred to as prediction data.

In the prediction section 220, learning data that are of a same kind with the learning data generated by the pre-process learning section 210 are generated. That is to say, when two kinds of learning data of the waveform data and the histogram are generated, the prediction section 220 generates two kinds of the prediction data of the waveform data and the histogram. Meanwhile, when learning data of only the waveform data are generated, the prediction section 220 generates prediction data of only the waveform data.

The classification determination section 223 inputs the prediction data generated to the learning algorithm, determines the classification of the prediction data, and gives the label 244 that is set to the classification to the prediction data. In the present embodiment, at this time, the classification determination section 223 uses the learned model 252.

When the prediction data to which the label 244 is given are collected by a predetermined number, the prediction value calculation section 224 predicts measurement data of a future time point using them. In the present embodiment, first, the prediction value calculation section 224 executes a process as a prediction label specification section. That is to say, the prediction value calculation section 224 arranges the labels 244 of the collected prediction data in time series so as to compare the arrangement result with the time series model 273 stored in the time series model storage section 270, and specifies a similar time series model 273. Then, according to the time series model 273 determined, the prediction value calculation section 224 specifies the label 244 of the prediction data of the future time point.

Further, the prediction value calculation section 224 calculates the representative data (the waveform data and the histogram) 263 stored in the representative data storage section 260 in association with the label 244 determined as a prediction value (expectation value).

The matching evaluation section 225 compares the prediction value calculated and the measurement data (measured data) actually measured of the future time point, and executes evaluation (matching). When the deviation σ is known for example, evaluation may be executed by whether or not the measurement data (measured data) fall within a range of 3σ from the prediction value.

Evaluation is executed on validity of the learned model generated by the pre-process learning section 210 for example. In evaluation, the matching evaluation section 225 calculates difference of the prediction value and the measured data. Then, the matching evaluation section 225 determines to be valid when the difference is within a predetermined range, and determines that relearning is necessary when the difference exceeds the predetermined range.

Also, instead of validity of the learned model, whether or not a failure or abnormality occurs may be determined. For example, the matching evaluation section 225 calculates difference of the prediction value and the measured data, and determines that there is possibility of occurrence of a failure or abnormality when the difference exceeds a predetermined range.

### [State Prediction Process]

Next, a flow of a state prediction process by the state prediction apparatus 100 of the present embodiment will be explained. Fig. 7 shows a flow of the entire flow of a state prediction process of the present embodiment.

As shown in the present drawing, first, the pre-process learning section 210 executes a pre-process and a learning process (step S1100). Here, the pre-process learning section 210 executes clustering, learning, and a time series model generation process as the pre-process and the learning process, and executes generation of the learned model, the time series model, and the representative data of each category. Thereafter, the prediction section 220 executes a prediction process using the latest measurement data and learned model, the representative data, and the time series model (step S1200). Also, the pre-process and the learning process are executed independently from the prediction process.

Below, the detail of each of the pre-process and the learning process as well as the prediction process will be explained. Here, explanation will be made exemplifying a case of generating the learning data having the waveform data and the histogram.

### [Pre-process and Learning Process]

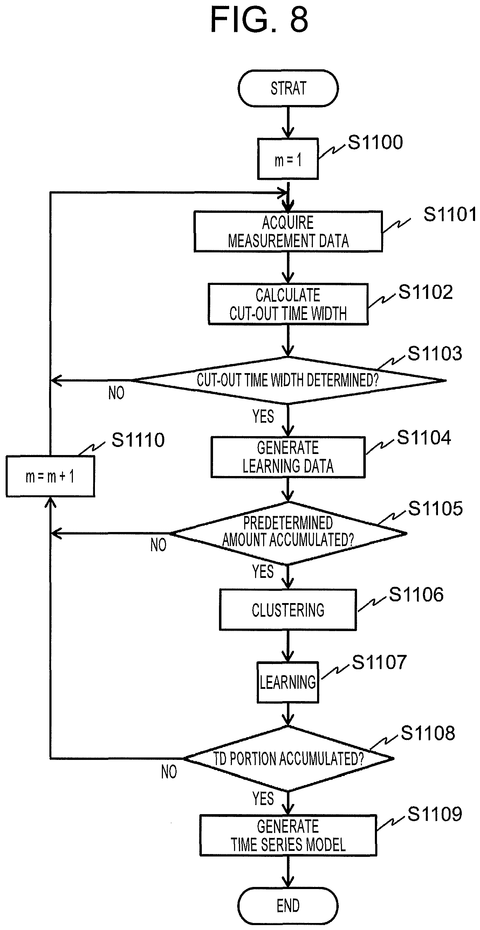

Fig. 8 is a process flow of a pre-process and a learning process by the pre-process learning section 210 of the present embodiment. In the present embodiment, in the pre-process and the learning process, the learned model, and the representative data and the time series model of each classification are generated. These pre-process and learning process are executed by triggers of the start instruction from a user, a preset time schedule, a separation signal of measurement, and so on. Also, these pre-process and learning process are executed using measurement data of the time when the plant equipment of the observation object is in a normal state. The pre-process learning section 210 is to receive measurement data from the observation sensors 300 at a predetermined time interval. Here, m is a counter, and counts the number of pieces of the cut-out time width TW.

First, the pre-process learning section 210 initializes the counter m (m=1) (step S1100).

The time width calculation section 211 acquires the measurement data (step S1101), and executes a calculation process for the m-th cut-out time width TW(m) at every acquisition (step S1102). Until the cut-out time width TW(m) is determined (step S1103), the time width calculation section 211 repeats acquisition of the measurement data and the calculation process for the cut-out time width TW(m). The detail of the cut-out time width determination process will be described below.

When the m-th cut-out time width TW(m) is determined, the learning data generation section 212 generates learning data (step S1104). Here, first, the learning data generation section 212 cut-outs waveform data and a histogram of a portion of the cut-out time width TW(m) from the acquired measurement data. Then, the learning data generation section 212 performs processing of normalization and the like with respect to the waveform data and the histogram cut-out with the cut-out time width TW(m) so as to be kept them within a predetermined range (dynamic range) of the data value, and generates learning data therefrom. Further, at this time, factors of the periodical change, seasonal variation, and so on may be removed. Also, every time the learning data are generated, the learning data generation section 212 discards measurement data having been acquired until just before.

The pre-process learning section 210 repeats the processes described above, and collects a predetermined number of the learning data. When the predetermined number of the learning data are generated (step S1105), the clustering section 213 subjects the predetermined number of the collected learning data (the waveform data and the histogram) to clustering (step S1106), and each of them is made supervised data. Thereby, a set of the supervised data namely the learning data set 243a is generated.

Also, when the predetermined number of the learning data has not been collected yet, the pre-process learning section 210 increments m by 1 (step S1110), and the pre-process learning section 210 returns to the step S1101 to repeat the process.

The learning section 214 inputs the learning data set 243a generated to the learning algorithm 251 for learning (step S1107), and generates the learned model 252. At this time, the learning section 214 also generates the representative data 263 of each classification.

Here, the time series model generation section 215 determines whether or not clustering of the measurement data of a portion of a predetermined model generation unit period TD has been finished (step S1108) Here, the time series model generation section 215 determines whether or not the model generation unit period TD has elapsed from the start of the process.

When the model generation unit period TD has not elapsed (step S1108; No), the pre-process learning section 210 returns to the step S1100 to repeat the process.

Meanwhile, when the model generation unit period TD has elapsed (step S1108; Yes), the time series model generation section 215 generates a time series model (step S1109), and finishes the process.

The time series model generation section 215 extracts the arrangement order of the labels 244 of the model generation unit period TD for example in time series. Then, the time series model generation section 215 refers to the time series model 273 already generated, and determines whether the time series model 273 of a same arrangement order has been stored or not. When the time series model 273 of a same arrangement order has been stored the time series model generation section 215 finishes the process as it is. Meanwhile, when the time series model 273 of a same arrangement order has not been stored, the time series model generation section 215 newly sets the model ID 272, stores the arrangement order of the labels 244 in the time series model storage section 270 as the time series model 273, and finishes the process.

In a case of group management in which the same model ID 272 is given to the arrangement order of the labels 244 of a predetermined degree of similarity, the procedure is as follows. First, the time series model generation section 215 determines whether or not the time series model 273 within a range of a predetermined degree of similarity has been stored. When it has been stored, the time series model generation section 215 finishes the process as it is. Meanwhile, when it has not been stored yet, the time series model generation section 215 newly set the model ID 272, and stores the obtained time series model 273.

### [Time Width Calculation Process]

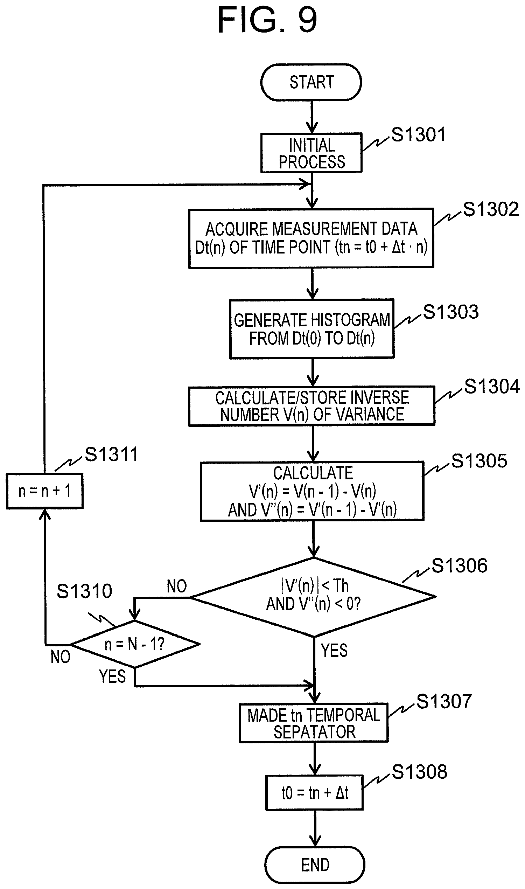

Next, a flow of the time width calculation process of S1102 described above will be explained according to Fig. 9. Here, explanation will be made including an acquisition process of the measurement data of the step S1101. In the present embodiment, every time the measurement data are obtained, the time width calculation section 211 generates a histogram showing frequency of each of the measurement data values. Then, the time width calculation section 211 decides a period in which the histogram shows a distribution similar to a lump of a crest-shape distribution as one motion mode period, and decides the period as the cut-out time width TW(m) for cutting the waveform data and the histogram. Specifically, the time width calculation section 211 decides a period from the start of collection of the measurement data to a time point when the inverse number of the variance value of the histogram takes a local maximum value as the cut-out time width TW(m).

Here, the measurement data are to be collected at every Δt. Also, the time point when Δt has elapsed from the last time point in determining the cut-out time width TW(m-1) of the last time (the m-1 time) is made a collection starting time point t0 of the measurement data. Here, n is the counter. Further, when the cut-out time width TW(m) is not determined even if N-number of the measurement data are collected, the time width calculation section 211 decides the predetermined time width as the cut-out time width TW(m).

First, the time width calculation section 211 executes an initial process (step S1301). Here, the time width calculation section 211 acquires measurement data Dt(0) of the time point t0 and measurement data Dt(1) of the time point t1 (t1=t0+Δt), and stores in the RAM 114 and the like for example. Then, the time width calculation section 211 sets the counter n to 2.

Next, the time width calculation section 211 acquires measurement data Dt(n) of the time point tn (tn=t0+Δt·n) (step S1302).

The time width calculation section 211 generates the histogram using the measurement data acquired from Dt(0) to Dt(n) (step S1303).

Then, the time width calculation section 211 calculates an inverse number V(n) of the variance of the generated histogram and stores the inverse number V(n) (step S1304). Further, the variance is obtained by obtaining the average value of the measurement data of the calculation object and dividing the sum of the squares of the difference of the average value and the values of each measurement data by the total number of the data.

Then, the time width calculation section 211 calculates V'(n) and V"(n) (step S1305). V'(n) is a value obtained by deducting V(n) from the inverse number V(n-1) of the variance of the histogram up to the measurement data Dt(n-1) acquired last time. Further, V"(n) is a value obtained by deducting V'(n) from V'(n-1).

Then, the time width calculation section 211 determines whether or not the condition that the absolute value of V'(n) is less than a predetermined threshold value Th and V"(n) is a negative value is satisfied (step S1306).

When the determination result of the step S1306 does not satisfy the condition, the time width calculation section 211 determines whether or not a predetermined number of the measurement data have been processed (step S1310). When the process of the predetermined number of the measurement data has not been finished, the time width calculation section 211 increases n by 1 (step S1311), and returns to the step S1302 to repeat the process.

When the determination result of the step S1306 satisfies the condition and when the process of the predetermined number of the measurement data has been finished in the step S1310, the time width calculation section 211 decides the time point tn of acquiring the measurement data Dt(n) of the processing object at the time as the temporal separator (step S1307). Also, the time width calculation section 211 decides the time from the time point t0 to the time point tn as the cut-out time width T(m).

Further, for the next time width setting process, the time width calculation section 211 sets the time point t0 (step S1308), and finishes the process. Here, the time point t0 is to be a time point obtained by adding Δt to the time point tn.

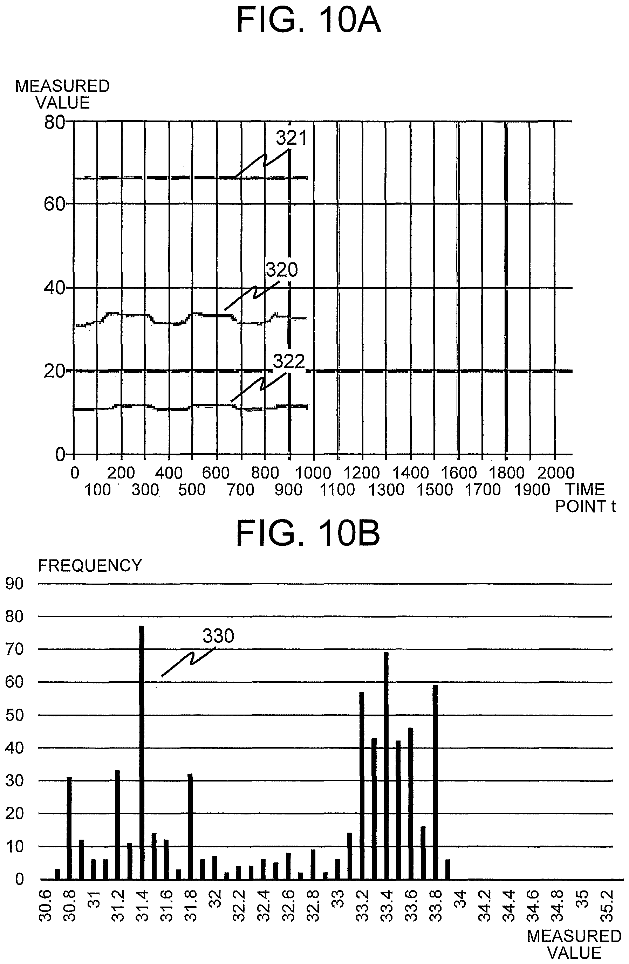

The time width calculation process described above by the time width calculation section 211 will be explained by a specific example. For example, it is assumed that measurement data 320 change temporally as shown in Fig. 10A. Also, the measurement data 320 are discrete values acquired at every Δt as described above. Also, Fig. 10B shows a histogram 330 that shows the frequency of each value of the measurement data 320 graphically.

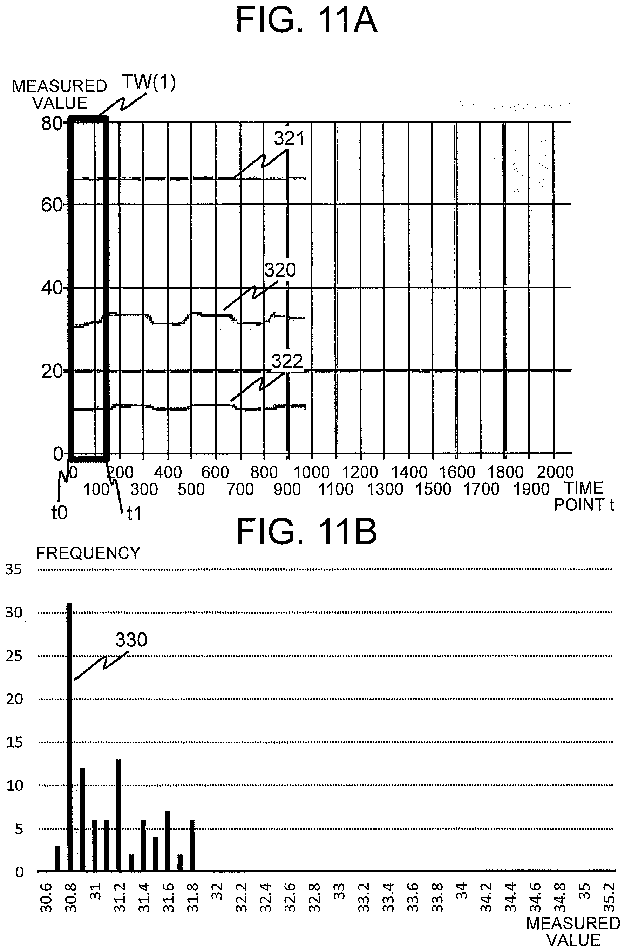

The time width calculation section 211 generates the histogram 330 as shown in Fig. 11B every time the measurement data 320 are acquired at the predetermined time interval Δt as shown in Fig. 11A. Then, every time the histogram 330 is generated, the time width calculation section 211 determines whether or not the inverse number V(n) of the variance of the histogram 330 takes a local maximum value. Specifically, the time width calculation section 211 calculates V'(n) and V"(n), and determines the condition of the step S1306.

The time width calculation section 211 decides the time until the condition of the step S1306 is satisfied, namely until the time point t1 at which the inverse number V(n) of the variance of the histogram takes a local maximum value, as the first cut-out time width TW(1).

Then, the time width calculation section 211 sets a time point obtained by adding Δt to the time point t1, namely a time point of acquiring measurement data 320 next to the last measurement data 320 of the first cut-out time width TW(1), to the collection starting time point t0 of the data of the next process loop. Further, the time width calculation section 211 newly starts collection of the measurement data 320 and generation of the histogram 330. This is a process for determining the second cut-out time width TW(2).

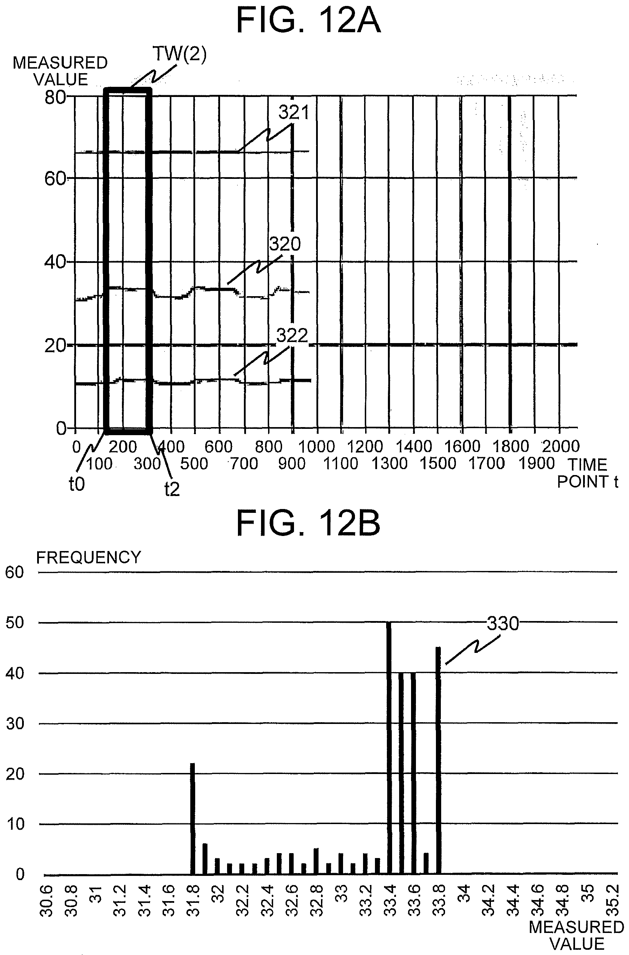

The time width calculation section 211 starts determination of the second cut-out time width TW(2). A state of a change of the measurement data 320 of this case is shown in Fig. 12A. Also, a state of a change of the histogram is shown in Fig. 12B.

In this case also, the time width calculation section 211 sets t1+Δt to the time point t0, and acquires the measurement data 320 at every Δt from the time point t0 as shown in Fig. 12A. Also, as shown in Fig. 12B, the time width calculation section 211 generates the histogram 330 at every acquisition, and determines whether or not the inverse number V(n) of the variance takes a local maximum value in each case. Then, the time width calculation section 211 decides the time until the time point t2 at which the inverse number V(n) of the variance takes a local maximum value as the second cut-out time width TW(2).

Then, the time width calculation section 211 sets a time point obtained by adding Δt to the time point t2, namely a time point of acquiring measurement data next to the last measurement data 320 of the second cut-out time width TW(2), to the time point t0, and newly starts collection of the measurement data 320 and generation of the histogram. This is a process for determining the third cut-out time width TW(3).

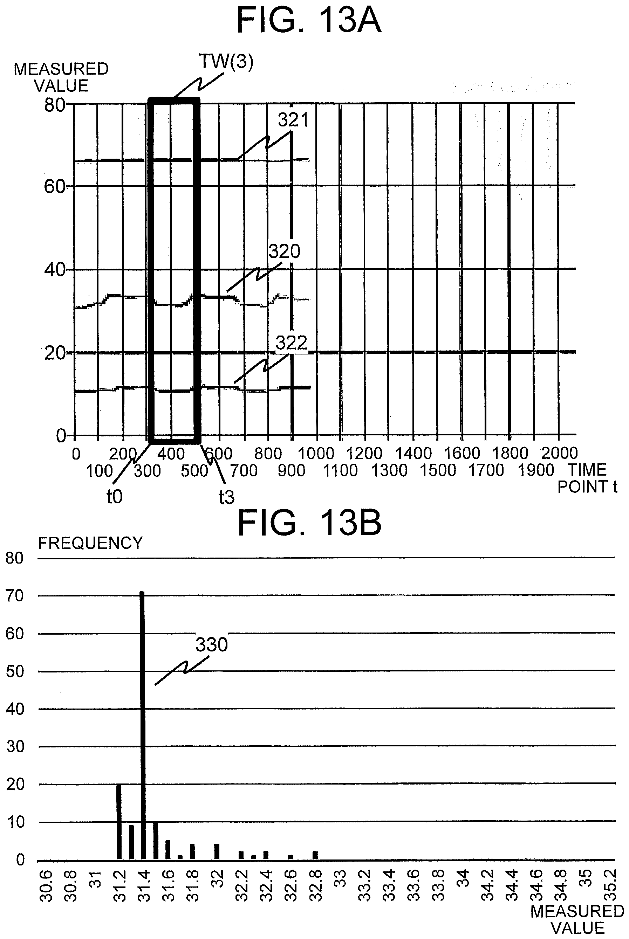

The time width calculation section 211 starts determination of the third cut-out time width TW(3). A state of a change of the measurement data 320 of this case is shown in Fig. 13A. Also, a state of a change of the histogram is shown in Fig. 13B.

In this case also, the time width calculation section 211 sets t2+Δt to the time point t0, and acquires the measurement data 320 at every Δt from the time point t0 as shown in Fig. 13A. Then, as shown in Fig. 13B, the time width calculation section 211 generates the histogram 330 at every acquisition, and determines whether or not the inverse number V(n) of the variance takes a local maximum value in each case. Further, the time width calculation section 211 decides the time until the time point t3 at which the inverse number V(n) of the variance takes a local maximum value as the third cut-out time width TW(3).

The time width calculation section 211 repeats the processes described above, and generates up to the M-th cut-out time width TW(M).

### [Prediction Process]

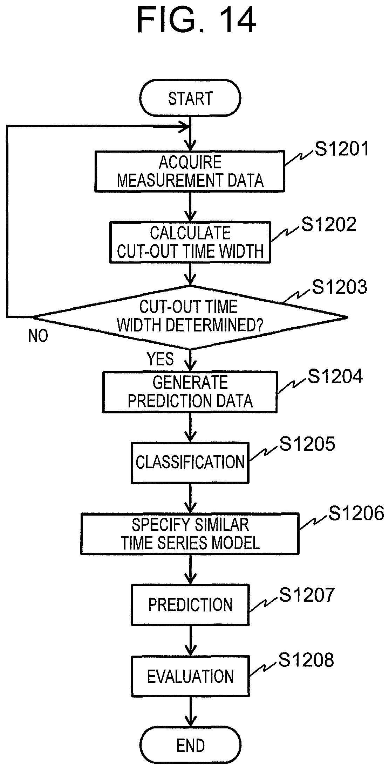

Next, a flow of the prediction process by the prediction section 220 will be explained. Fig. 14 shows a process flow of the prediction process of the present embodiment. The prediction process is started by triggers of the start instruction from a user, a preset time schedule, a separation signal of measurement, and so on.

Similarly to the learning process, every time the time width calculation section 221 of the prediction section 220 acquires measurement data (step S1201), the time width calculation section 221 tries calculation of the cut-out time width (step S1202). Until the cut-out time width is determined, the time width calculation section 221 repeats the steps S1201 and S1202. The calculation method of the cut-out time width is similar to that of the process by the time width calculation section 211 of the pre-process learning section 210.

When the time width calculation section 221 determines the cut-out time width (step S1203; Yes), the prediction data generation section 222 generates prediction data (step S1204). The method for generating prediction data is basically similar to the learning data generation method by the learning data generation section 212 of the pre-process learning section 210. For example, the prediction data generation section 222 executes a normalization process so that the value is kept within a predetermined value width (dynamic range). Further, the prediction data generation section 222 may removes factors of the periodical change, seasonal variation, and so on.

Next, the classification determination section 223 classifies the prediction data (the waveform data and the histogram) generated using the learning algorithm and the learned model (step S1205). Here, the classification determination section 223 gives the label 244 set to the classified category to the prediction data.

Thereafter, the prediction value calculation section 224 arranges the labels 244 of the prediction data of each cut-out time width classified so far in the order of the time point. Then, the prediction value calculation section 224 compares the arrangement results with the time series model 273 stored, and specifies the time series model (group) 273 including the arrangement order of the highest degree of similarity as the most similar time series model (step S1206).

For example, when the arrangement order of the labels 244 obtained from the prediction data of the waveform data is Aw, Bw, Cw and the arrangement order of the labels 244 obtained from the prediction data of the histogram is Eh, Bh, Ch, in the time series model data 271 shown in Fig. 6, the time series model 273 whose model ID 272 is TS_4 has the highest degree of similarity. Therefore, the time series model 273 whose model ID 272 is TS_4 is specified to be the most similar time series model.

Also, when the arrangement order of the labels 244 obtained from the prediction data of the waveform data is Bw, Dw, Aw and the arrangement order of the labels 244 obtained from the prediction data of the histogram is Ah, Ah, Ah, in the time series model data 271 shown in Fig. 6, the time series model 273 whose model ID 272 is TS_3 includes this arrangement order, and has the highest degree of similarity. Therefore, the time series model 273 whose model ID 272 is TS_3 is specified to be the most similar time series model.

Also, when only the waveform data are used as the learning data and the prediction data, the most similar time series model is determined only by the time series model of the waveform data.

Further, the prediction value calculation section 224 predicts the waveform data and the histogram thereafter using the most similar time series model determined (step S1207). Here, the prediction value calculation section 224 specifies the labels thereafter (prediction labels) according to the most similar time series model determined. Then, the prediction value calculation section 224 decides the representative data 263 (the representative waveform data 263w and/or the representative histogram 263h) stored in association with the prediction label as the prediction value.

For example, in a case of the example described above where the most similar time series model is the time series model 273 with the model ID of TS_4 shown in Fig. 6, with respect to the waveform data, the next label 244 is Dw. Therefore, the representative waveform data 263w stored in association with the label Dw is calculated as the prediction value.

Thereafter, the matching evaluation section 225 compares the actual measurement data outputted thereafter from the observation sensor 300 and the prediction value obtained in the step S1207, and executes evaluation (step S1208).

As explained above, the state prediction apparatus 100 of the present embodiment is provided with: the learning data generation section 212 that acquires first sensor data at a predetermined time interval, the first sensor data being obtained by the first observation sensor 300 observing the state of an observation object, separates the first sensor data for each motion mode of the observation object, and generates learning data; the clustering section 213 that classifies each of the learning data of a predetermined number generated into a predetermined category, gives a label prepared beforehand for each of the category, and generates supervised data; the learning section 214 that inputs the supervised data of the predetermined number to a learning algorithm to learn the supervised data, generates a learned model 252 of the learning algorithm, and generates representative data of each of the category; the time series model generation section 215 that arranges the labels 244 given to the learning data by the clustering section 213 within a predetermined model generation unit period in time series in order of generation of the
learning data, and generates a time series model 273; and the prediction section 220 that calculates a prediction value of the first sensor data as a state of the observation object of a future time point from newly acquired first sensor data using the time series model 273.

Therefore, according to the present embodiment, even when the observation object has plural motion modes and the measurement data change in a complicated manner, since the learning data are generated by being separated for each motion mode, the learning data for state prediction can be generated from the data separated appropriately reflecting the state. Because the learned model, the representative data, and the time series model for prediction are generated from the result learned using appropriate learning data, highly accurate prediction value can be secured.

Further, the state prediction apparatus 100 of the present embodiment may be further provided with a time width calculation section that calculates the time width for each motion mode as the cut-out time width using the first sensor data. By being provided with the time width calculation section, the state prediction apparatus 100 of the present embodiment can detect the separator of the motion mode from actual measurement data. Therefore, the state prediction apparatus 100 of the present embodiment can detect the motion mode with higher accuracy, and can separate the measurement data according to the detection result. Accordingly, the prediction value with higher accuracy can be secured.

Thus, according to the present embodiment, the state of the observation object can be predicted accurately based on the time series observation value of the physical quantity (measurement data) related to the observation object.

In the present embodiment, the histogram also may be subjected to clustering, learned, and classified as well. In the measurement data, there are measurement data of a type where the distribution (histogram) expressing the rate of the value is more meaningful than the waveform (waveform data) expressing the order of appearance of the value within a predetermined time width by the nature of the measurement data. With respect to the histogram also, by executing a process similar to that for the waveform data, the measurement data of such type also can be classified adequately according to the feature of them. That is to say, according to the present embodiment, the measurement data can be analyzed multilaterally.

### [Modification]

According to the embodiment described above, in the time width calculation process, the time from start of collection of the measurement data until the time point at which the inverse number of the variance value of the histogram takes a local maximum value is determined to be the cut-out time width TW(m). However, the method for determining the cut-out time width is not limited to it. For example, it is also possible that the average value of the measurement data values (measured values) from the acquisition starting time point is calculated every time the measurement data are acquired, and the time between the time points when variation of the average value takes an extreme value is made the cut-out time width TW(m).

In this case, specifically, the change amount (differential) of the average value of the measurement data values is calculated, and the time until the time point at which the change amount becomes less than a predetermined threshold value is made the cut-out time width TW(m). The threshold value is to be a value near 0.

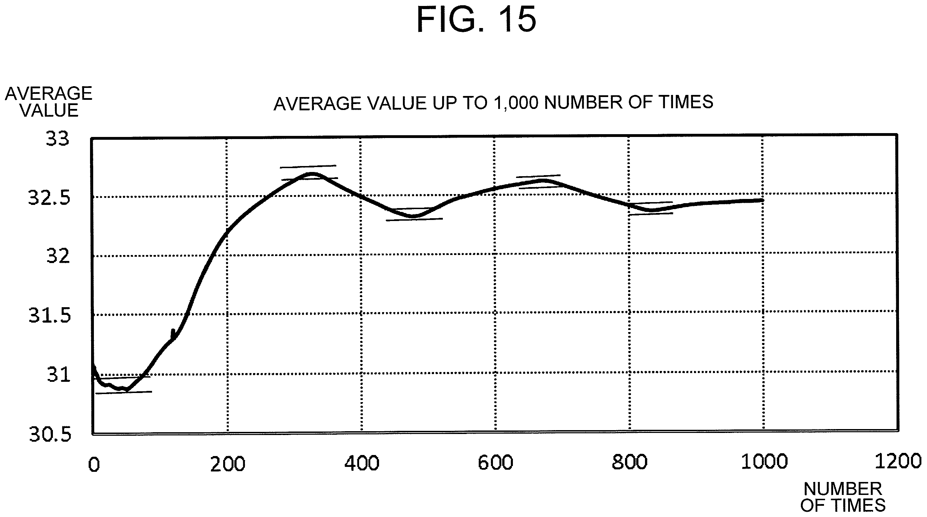

For example, the transition of the average value of the measurement data values of a case of acquiring the measurement data by 1,000 times (1,000 number of times) is shown in Fig. 15. In the present graph, the horizontal axis represents the number of times of the measurement data, and the vertical axis represents the average value of the measurement data.

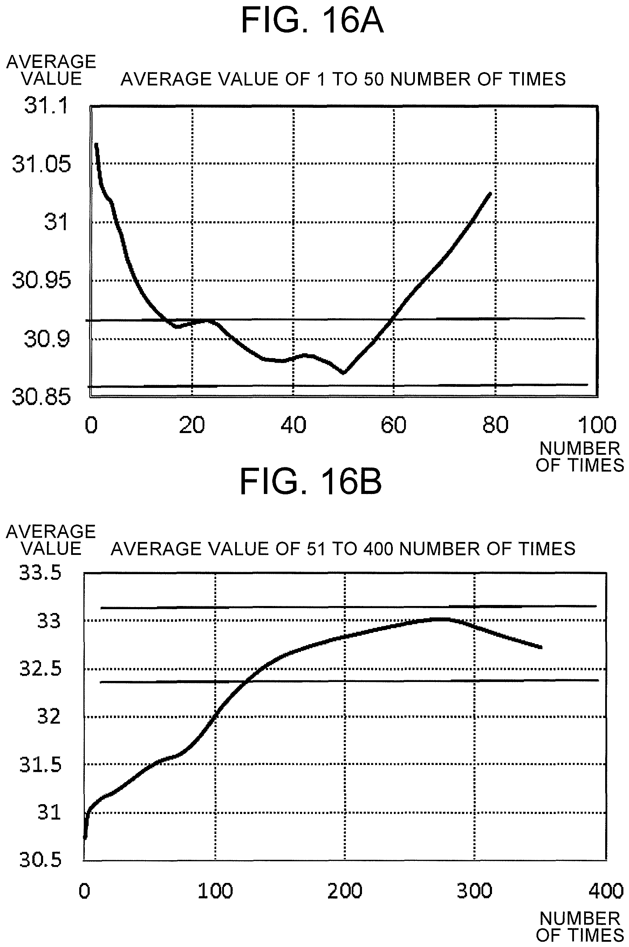

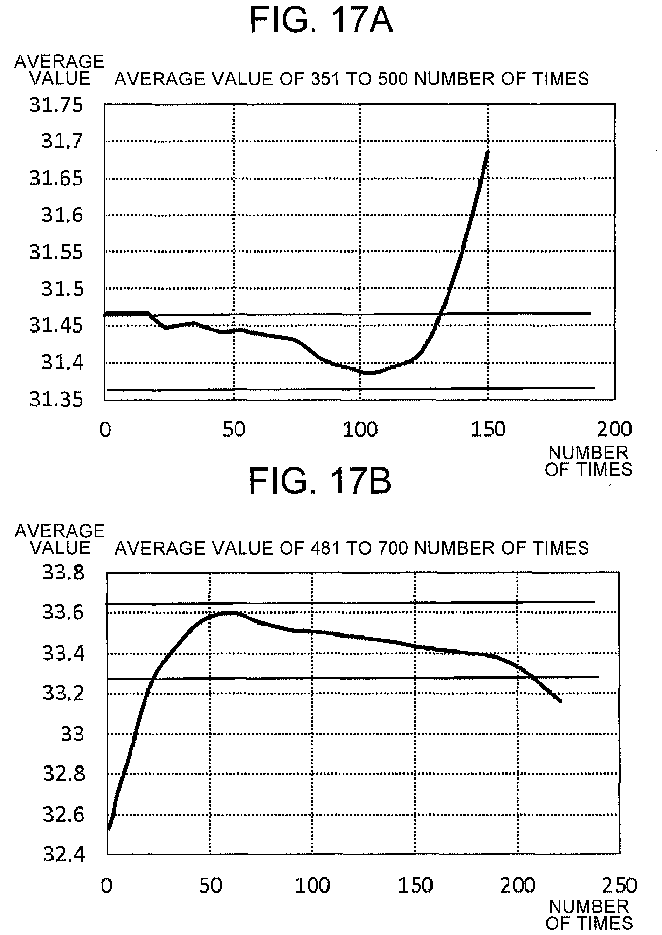

As shown in the present drawing, the change of the average value takes an extreme value between 1 to 50 number of times, between 351-400 number of times, between 451-500 number of times, between 651-700 number of times, between 800-851 number of times, and so on. Enlarged views of the transition of the average value between 1 to 50 number of times, the transition of the average value between 51-400 number of times, the transition of the average value between 351-500 number of times, the transition of the average value between 481-700 number of times out of these respective periods are shown in Fig. 16A to Fig. 17B respectively. In each drawing, the vertical axis represents the average value of the measurement data, and the horizontal axis represents the number of times (cumulative total) of the observation number of times in the observation period of the graph. That is to say, the most leftward value (0) of the horizontal axis is 1 in Fig. 16A, 51 in Fig. 16B, 351 in Fig. 17A, and 481 in Fig. 17B.

In the present modification, every time the measurement data are acquired, the average value of each of the measurement data from the time point t0 until the time point of that time is calculated, and the transition of the average value is obtained. Then, the difference between the obtained average value and the average value calculated last time is calculated. When this difference is generally near 0 as shown in these drawings, it is determined that the average value takes an extreme value, and that time point is made the temporal separator.

### <<Second Embodiment>>

Next, the second embodiment of the present invention will be explained. In the present embodiment, each of the measurement data from plural observation sensors 300 acquired simultaneously is predicted. However, the cut-out time width is determined using predetermined measurement data, and the cut-out time width is applied to other all measurement data.

Hereinafter, the present embodiment will be explained referring to the measurement data determining the cut-out time width as main measurement data (the first sensor data obtained by the first observation sensor), and referring to other data as subsidiary measurement data (including the second sensor data obtained by the second observation sensor). For example, in the example of Fig. 10A of the first embodiment, 320 is the main measurement data, and other 321 and 322 are the subsidiary measurement data.

Also, in the present embodiment, with respect to all of the plural measurement data, measurement data in question is made the main measurement data, remaining measurement data are made the subsidiary measurement data, and the process described below is executed respectively. Below, the present embodiment will be explained exemplifying a case where a predetermined measurement data is made the main measurement data, and remaining measurement data are made the subsidiary measurement data.

The hardware configuration and the functional block of the state prediction apparatus 100 of the present embodiment are similar to those of the first embodiment. Below, the present embodiment will be explained focusing on configurations different from those of the first embodiment.

In the present embodiment, in addition to the main measurement data 320, the subsidiary measurement data 321 and 322 are also cut out with the cut-out time width for the main measurement data 320, and the learning data are generated. Then, the learned model is generated for each of the subsidiary measurement data 321 and 322, and the representative data and the time series model for each category (label) are generated.

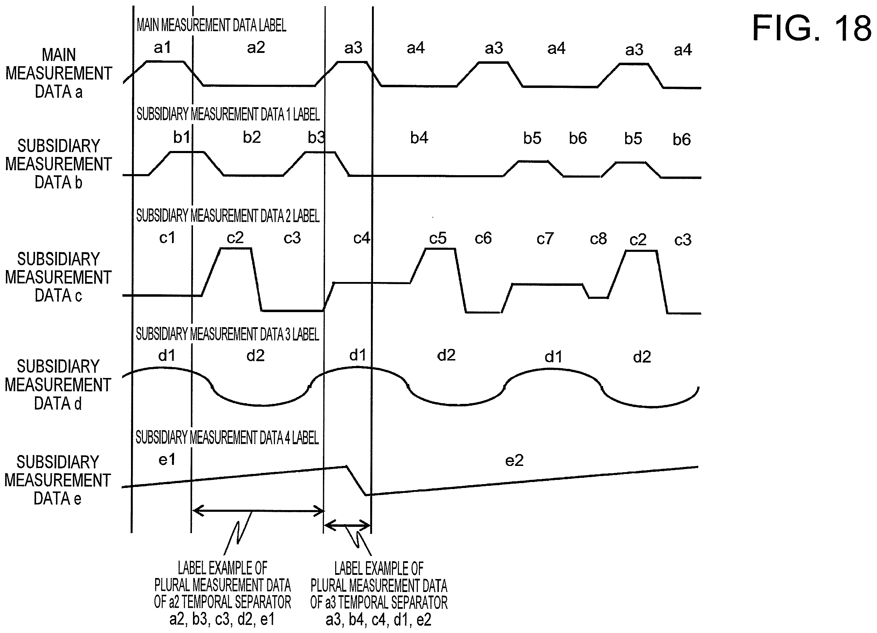

The summary of the present embodiment will be explained using Fig. 18. With respect to each measurement data "a" - "e", the cut-out time width is determined by the method of the first embodiment respectively, and the state where the label 244 is given is shown in Fig. 18 respectively.

Here, the measurement data "a" is made the main measurement data, and the remaining measurement data "b" - "e" are made the subsidiary measurement data. In the present embodiment, when the main measurement data is the measurement data "a" for example, the measurement data of the subsidiary measurement data "b" - "e" are also cut out with the cut-out time width for the main measurement data "a", and the learning data are generated respectively.

For example, with respect to the cut-out time width where the label "a2" of the main measurement data "a" is given, the subsidiary measurement data "b" - "e" are cut out with this cut-out time width irrespective of the temporal separator (cut-out time width) peculiar to the measurement data, and are used for the processes thereafter.

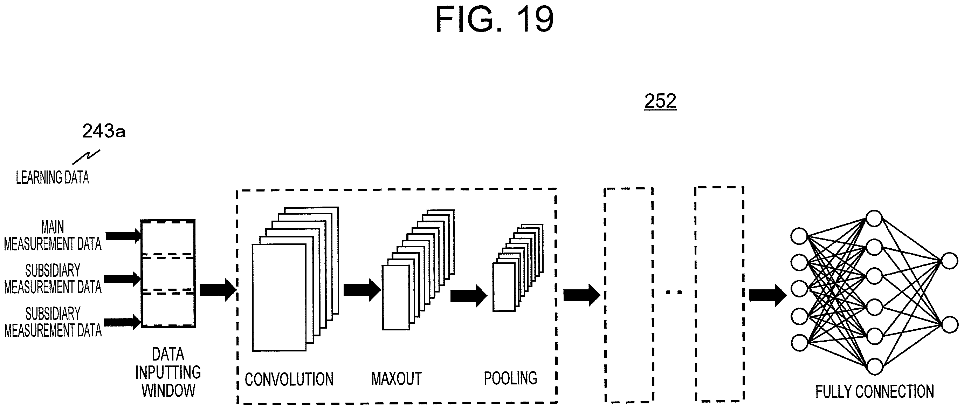

The manner in which learning by the learning section 214 of the present embodiment will proceed will be explained using Fig. 19. In the present embodiment, the learning section 214 inputs all of the learning data obtained from the main measurement data and the learning data obtained from the subsidiary measurement data to the data inputting window, and executes learning similarly to the first embodiment. Eventually, the learning section 214 obtains the learned model 252.

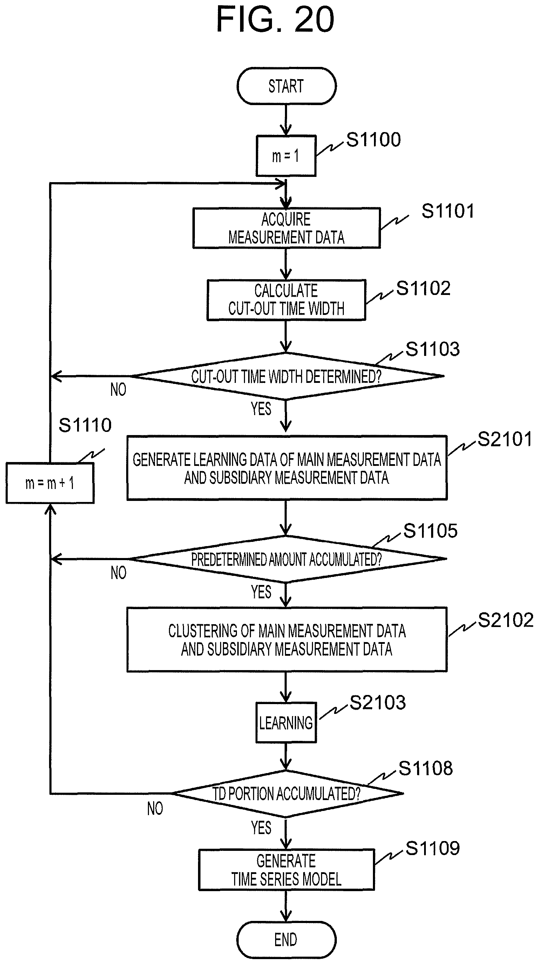

In Fig. 20, a process flow of the learning process of the present embodiment is shown. The learning process of the present embodiment is similar to that of the first embodiment up to determination of the cut-out time width of the step S1103. However, the data used for determination of the cut-out time width is the main measurement data 320.

After determining the cut-out time width, the learning data generation section 212 generates the learning data of each of the main measurement data 320 and the subsidiary measurement data 321, 322 (step S2101). At this time, for the cut-out time width TW(m), one determined by the main measurement data 320 using a method similar to that of the first embodiment is used. Other points of the generation method are similar to those of the learning data generation method of the first embodiment. In the present embodiment also, the learning data generation section 212 may generates the learning data of the waveform data and the histogram with respect to each of the measurement data.

Thereafter, when a predetermined amount of the learning data is accumulated (step S1105), the clustering section 213 executes clustering of the learning data generated from the main measurement data 320 and clustering of the subsidiary measurement data 321, 322 (step S2102). Clustering of the main measurement data is similar to that of the first embodiment.

Meanwhile, with respect to the subsidiary measurement data, the clustering section 213 classifies the learning data obtained by cutting out the subsidiary measurement data with the cut-out time width TW(m) respectively by a method similar to that for the main measurement data. Thereby, the clustering section 213 generates the supervised data with respect to each measurement data. The number of the categories and the label of each category are prepared beforehand for each subsidiary measurement data kind.

Then, as shown in Fig. 19, the learning section 214 inputs all of the learning data set 243a generated to the learning algorithm 251 for learning (step S2103) to generate the learned model 252, and calculates the representative data.

Thereafter, in the present embodiment also, the time series model generation section 215 determines whether or not the model generation unit period TD has elapsed (step S1106). Then, when the model generation unit period TD has not elapsed yet, the pre-process learning section 210 increments the value of the counter m calculating the cut-out time width by 1 (step S1108), and returns to the step S1101 to repeat the process.

Meanwhile, when the model generation unit period TD has elapsed, the time series model generation section 215 generates the time series model 273 with respect to the waveform data and the histogram of each of the main measurement data and the subsidiary measurement data (step S1107), and finishes the process.

Further, in the prediction process also, similarly to the learning process, the cut-out time width is calculated using the main measurement data. Thereafter, each of the main measurement data and the subsidiary measurement data are cut out with the cut-out time width that determined the waveform data and the histogram, and the prediction data are generated. Also, classification and prediction are executed using each of the prediction data of each of them.

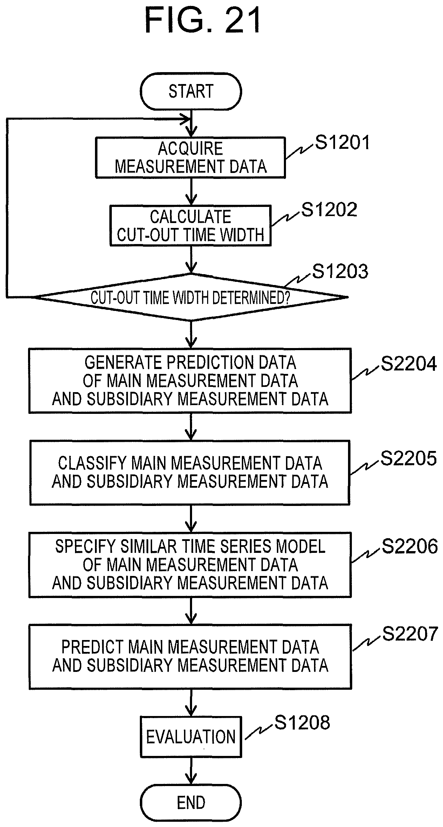

A flow of the prediction process of the present embodiment will be explained using Fig. 21. The prediction process of the present embodiment is also similar to that of the first embodiment up to determination of the cut-out time width of the step S1203. However, the data used for determination of the cut-out time width are the main measurement data 320.

After determining the cut-out time width, the prediction data generation section 222 generates the prediction data of each of the main measurement data 320 and the subsidiary measurement data 321, 322 (step S2204). The generation method of the prediction data is similar to that of the first embodiment.

Thereafter, similarly to the first embodiment, the classification determination section 223 inputs all of the prediction data to the deep learning net of the learned model, specifies the classification of each prediction data, and determines the label 244 to be given (step S2205). Here, with respect to the prediction data generated from each of the main measurement data 320 and the subsidiary measurement data 321, 322, the classification determination section 223 determines the classification and specifies the label 244.

Thereafter, similarly to the first embodiment, the prediction value calculation section 224 determines a similar time series model with respect to each of the main measurement data 320 and the subsidiary measurement data 321, 322 (step S2206). Then, the prediction value calculation section 224 predicts the waveform data and the histogram of a future time point (step S2207), and decides the predicted results as the prediction value.

Further, the matching evaluation section 225 compares the actual measurement data thereafter outputted from the observation sensor 300 and the prediction value obtained in the step S2207, and executes evaluation similarly to the first embodiment (step S1208) .

As described above, in the present embodiment, with respect to the measurement data of all kinds, the process described above is executed with each of them being made the main measurement data and with the remaining measurement data being made the subsidiary measurement data. According to the result of it, the main measurement data may be thereafter fixed to measurement data of one or predetermined group. With respect to the main measurement data, it is preferable to select data where the change of the measurement data value follows the change of the motion mode most for example among the measurement data of plural kinds.

As explained above, in addition to the configuration of the first embodiment, the state prediction apparatus 100 of the present embodiment subjects the subsidiary measurement data also to clustering similarly to the main measurement data, and generates the learned model 252, the representative data 263, and the time series model 273.

Thus, according to the present embodiment, in addition to the effects of the first embodiment, a large variety of measurement data can be predicted highly accurately with a simple configuration.

The present invention is not limited to the embodiments described above, and includes various modifications. For example, the embodiments described above were explained for easy understanding of the present invention, and are not necessarily limited to those being provided with all configurations explained. Also, a part of a configuration of an embodiment can be replaced with a configuration of another embodiment, and a configuration of an embodiment can be added with a configuration of another embodiment. Further, with respect to a part of a configuration of each embodiment, addition, deletion, and replacement of other configurations are possible.

Furthermore, a part or all of each of the configurations, functions, process sections, processing means, and the like described above may be achieved by hardware by designing by an integrated circuit and so on for example.

Also, with respect to the control line and the information line, those considered to be necessary for explanation are shown, and all of the control line and the information line of the product have not necessarily been shown. In fact, it can be considered also that almost all configurations are connected to each other.

### REFERENCE SIGNS LIST

- 100...: State prediction apparatus
- 112...: CPU
- 113...: ROM
- 114...: RAM
- 115...: File unit
- 116...: External interface
- 117...: Monitor
- 118...: Bus
- 210...: Pre-process learning section
- 211...: Time width calculation section
- 212...: Learning data generation section
- 213...: Clustering section
- 214...: Learning section
- 215...: Time series model generation section
- 220...: Prediction section
- 221...: Time width calculation section
- 222...: Prediction data generation section
- 223...: Classification determination section
- 224...: Prediction value calculation section
- 225...: Matching evaluation section
- 230...: Label storage section
- 231...: Label data
- 240...: Learning data set storage section
- 241...: Supervised data
- 241h...: Supervised data
- 241w...: Supervised data
- 242...: Acquisition time point
- 242h...: Acquisition time point
- 242w...: Acquisition time point
- 243...: Learning data
- 243a...: Learning data set
- 243b...: Prediction data
- 243c...: Classification
- 243w...: Learning data of waveform
- 243h...: Learning data of histogram
- 244...: Label
- 244h...: Label
- 244w...: Label
- 250...: Learned model storage section
- 251...: Learning algorithm
- 252...: Learned model
- 260...: Representative data storage section
- 261...: Representative database
- 261w...: Representative database
- 261h...: Representative database
- 263...: Representative data
- 263h...: Representative histogram
- 263w...: Representative waveform data
- 270...: Time series model storage section
- 271...: Time series model data
- 272...: Model ID
- 273...: Time series model
- 300...: Observation sensor
- 311...: Current sensor
- 312...: Voltage sensor
- 313...: Temperature sensor
- 314...: Pressure sensor
- 315...: Acceleration sensor
- 316...: Camera
- 320...: Measurement data (main measurement data)
- 321...: Subsidiary measurement data
- 322...: Subsidiary measurement data
- 330...: Histogram

## Claims

1. A state prediction apparatus, comprising:
a learning data generation section configured to acquire first sensor data at a predetermined time interval, the first sensor data being obtained by a first observation sensor observing the state of an observation object, separate the first sensor data for each motion mode of the observation object, and generate learning data;
a clustering section configured to classify each of the learning data of a predetermined number generated into a predetermined category, give a label prepared beforehand for each of the category, and generate supervised data;
a learning section configured to input the supervised data of the predetermined number to a learning algorithm to learn the supervised data, generate a learned model of the learning algorithm, and generate representative data of each of the category;
a time series model generation section configured to arrange the labels given to the learning data by the clustering section within a predetermined model generation unit period in time series in order of generation of the learning data, and generate a time series model; and
a prediction section configured to calculate a prediction value of the first sensor data as a state of the observation object of a future time point from newly acquired first sensor data using the time series model.

2. The state prediction apparatus according to claim 1, further comprising
a time width calculation section configured to calculate a time width of each of the motion mode as a cut-out time width using the first sensor data,
wherein the learning data generation section separates the first sensor data with a cut-out time width calculated by the time width calculation section, and
the time width calculation section generates a histogram of values of the first sensor data every time the first sensor data are acquired so as to decide a time width where the histogram shows a crest-shape distribution as the cut-out time width.

3. The state prediction apparatus according to claim 2,
wherein the time width calculation section calculates a reverse number of variance of the histogram, and calculates a period from a time point immediately after the last cut-out time to a time point at which the reverse number of the variance takes an extreme value as the cut-out time width, every time the histogram is generated.

4. The state prediction apparatus according to claim 1, further comprising:
a representative data storage section configured to store the representative data of each category and the label of each of the category in association with each other; and
a time series model storage section configured to store the time series models which are generated at each of the model generation unit periods and in which arrangement order of the label is different each other in association with time series model identification information respectively,
wherein the prediction section includes:
a prediction data generation section configured to separate the first sensor data acquired at a predetermined time interval for each of the motion mode, and generate prediction data;
a classification determination section configured to input the prediction data generated to the learned model to classify the prediction data into any of the categories, and give the label that is set to the category;
a prediction label specification section configured to arrange the labels in time series, determine a time series model having the highest degree of similarity of arrangement order among the time series models stored in the time series model storage section, and specify a label of a future time point as a prediction label according to the time series model determined, every time the label is given; and
a prediction value calculation section configured to calculate the representative data stored in the representative data storage section in association with the prediction label specified as the prediction value of the first sensor data.

5. The state prediction apparatus according to claim 2,
wherein the learning data generation section separates second sensor data of the observation object by the cut-out time width calculated using the first sensor data and further generates the learning data, the second sensor data being obtained by a second observation sensor that observes a state different from that observed by the first observation sensor,
the clustering section classifies the learning data generated from the second sensor data into a category that is predetermined for the second sensor data, gives a second label that is prepared beforehand for each of the category, and generates the supervised data of the second sensor data,
the learning section inputs supervised data of a predetermined number of the first sensor data and supervised data of the second sensor data to the learning algorithm, and generates the learned model,
the time series model generation section arranges the second labels in time series, and further generates a second time series model, and
the prediction section further calculates a prediction value of the second sensor data as a state of the observation object of the future time point using the second time series model from the second sensor data newly acquired.

6. The state prediction apparatus according to claim 1, further comprising
a time width calculation section configured to calculate a time width of each of the motion mode as a cut-out time width using the first sensor data,
wherein the learning data generation section separates the first sensor data with a cut-out time width calculated by the time width calculation section, and
the time width calculation section calculates an average value of values of the first sensor data obtained from an acquisition starting time point, and calculates a time between time points at which the average values take extreme values as the cut-out time width, every time the first sensor data are acquired.

7. The state prediction apparatus according to any one of claims 1 to 6, further comprising a matching evaluation section configured to compare the prediction value and the newly acquired first sensor data to each other for evaluation.

8. A state prediction control method, comprising:
a learning data generation step for repeating to acquire first sensor data at a predetermined time interval, the first sensor data being obtained by a first observation sensor observing the state of an observation object, to separate the first sensor data for each motion mode of the observation object, and to generate learning data, and obtaining the learning data of a predetermined number;
a clustering step for classifying each of the learning data of a predetermined number into a predetermined category, giving a label determined beforehand for each of the category, and generating supervised data;
a learning step for inputting the supervised data of the predetermined number to a learning algorithm to learn the supervised data, generating a learned model of the learning algorithm, and generating representative data of each of the category;
a time series model generation step for arranging the labels given to the learning data within a predetermined model generation unit period in time series in order of generation of the learning data, and generating a time series model; and
a prediction step for calculating a prediction value of the first sensor data as a state of the observation object of a future time point using the time series model from the first sensor data newly acquired.
